# EUROPÄISCHE PATENTANMELDUNG

(11) **EP 1 621 256 A1**
(43) Veröffentlichungstag der Anmeldung: **01.02.2006**
(21) Anmeldenummer: 05015485.5
(22) Anmeldetag: 16.07.2005
(51) Int. Cl.: B05B 12/14, B08B 9/04, F16L 55/46, F28G 1/12

(54) **Versorgungseinheit für eine Applikationseinrichtung und Verfahren zum Betreiben einer solchen**

(30) Priorität: 31.07.2004 DE 102004037247
(71) Anmelder: EISENMANN Lacktechnik GmbH & Co. KG, 71032 Böblingen (DE)
(72) Erfinder: Albrecht, Markus, 74323 Abstatt (DE); Hahnemann, Heiko, 71364 Winnenden (DE)
(74) Vertreter: Ostertag, Ulrich

(57) **Zusammenfassung**

Es wird eine Versorgungseinheit für eine Applikationseinrichtung, insbesondere für eine Lackapplikationseinrichtung, und ein Verfahren zum Betreiben einer solchen beschrieben, mit wenigstens einem Molch (6, 44, 45), der in wenigstens einer Molchleitung (2) zwischen wenigstens zwei Molchstationen (1) beförderbar ist, und mindestens einem Sensor (7, 50) zum Erfassen der Position des wenigstens einen Molches (6, 44, 45), der mit einer Steuereinheit (5) zum Steuern der Versorgungseinheit in Verbindung steht. Eine automatisch steuerbare Molchaustauschvorrichtung weist eine Molchwechselstation (30) mit einer Mehrzahl von Molchaufnahmen (33 bis 43) für Molche (6, 44, 45); eine zuschaltbare druckdichte Molchverbindung (28, 29), mit der die Molchstation (1) mit der Molchwechselstation (30) verbindbar ist und durch die hindurch Molche (6, 44, 45) in beiden Richtungen beförderbar sind; wenigstens einen mit der Steuereinheit (5) steuerbarer Antrieb (16, 21, 25) zum Verbinden und Lösen der Molchverbindung (28,29) mit der Molchstation (1) und der Molchwechselstation (30); wenigstens einen Anschluß (12, 56) an eine Versorgungsquelle für ein Schiebemedium zum Befördern des wenigstens einen Molches (6, 44, 45) durch die Molchverbindung (28, 29), auf.

## Beschreibung

Die Erfindung betrifft eine Versorgungseinheit für eine Applikationseinrichtung, insbesondere für eine Lackapplikationseinrichtung, mit wenigstens einem Molch der in wenigstens einer Molchleitung zwischen wenigstens zwei Molchstationen beförderbar ist, und mindestens einem Sensor zum Erfassen der Position des wenigstens einen Molches, der mit einer Steuereinheit zum Steuern der Versorgungseinheit in Verbindung steht.

Unter einer "Molchleitung" wird vorliegend eine molchbare Leitung für flüssige, pasteuse oder in sonstiger Weise fließfähige Medien verstanden.

Außerdem betrifft die Erfindung ein Verfahren zum Betreiben einer Versorgungseinheit für eine Applikationseinrichtung, insbesondere für eine Lackapplikationseinrichtung, bei dem wenigstens ein Molch in wenigstens einer Molchleitung zwischen wenigstens zwei Molchstationen befördert und die Position des wenigstens einen Molches mit mindestens einem Sensor erfasst wird, insbesondere zum Betreiben einer erfindungsgemäßen Vorrichtung.

Aus der WO 2004/009247 A1 ist ein Verfahren zur Versorgung einer Lackapplikationseinrichtung mit Lack bekannt, bei dem Molche zwischen zwei Molchstationen hin und her befördert werden, um Lacke und Reinigungsmittel durch eine Molchleitung zu transportieren und diese Molchleitung zu reinigen. Der Aufenthaltsort der Molche wird mit Sensoren erfasst und das Verfahren wird mit einer Steuereinheit gesteuert. Um optimale Ergebnisse zu erzielen und insbesondere bei einem Farbwechsel Farbrückstände in den Molchleitungen rückstandslos zu entfernen, müssen die Mantelflächen der Molche bei der Beförderung möglichst fluiddicht an den Innenmantelflächen der Molchleitung anliegen. Dies führt zu Verschleiß der Molche. Da die Qualität der Reinigung und Effizienz des Transports der Farbe und des Reinigungsmittels entscheidend von dem Zustand der Molche abhängen, müssen verschlissene Molche ausgetauscht werden. In bestimmten Fällen, bei häufigem Farbwechsel oder bei Wechsel zwischen heller und dunkler Farbe, kann ebenfalls ein Wechsel des Molches notwendig werden.

Aus der DE 102 34 247 A1 ist eine Vorrichtung zur Messung eines Betriebsparameters einer Beschichtungsanlage für Gegenstände bekannt, mit der unter Einsatz von Sensoren der Zustand und/oder der Aufenthaltsort von Molchen innerhalb eines Schlauches zur Beförderung von Lacken überwacht wird.

Aufgabe der vorliegenden Erfindung ist es, eine Vorrichtung und ein Verfahren der Eingangs genannten Art so zu erweitern, dass Molche während des Betriebes der Applikationseinrichtung, insbesondere bei einem Farbwechsel oder wenn die Molche verschlissen sind, austauschbar sind, ohne dass die Applikationseinrichtung oder die Versorgungseinheit geöffnet werden muss. Darüber hinaus soll eine Austausch der Molche zyklisch automatisch gesteuert möglich sein. Außerdem sollen auch mehrere Austauschvorgänge ohne manuellen Eingriff durchführbar sein.

Diese Aufgabe wird erfindungsgemäß durch eine automatisch steuerbare Molchaustauschvorrichtung gelöst, die folgenden Komponenten aufweist:
a) eine Molchwechselstation mit einer Mehrzahl von Molchaufnahmen für Molche;
b) eine zuschaltbare druckdichte Molchverbindung, mit der die Molchstation mit der Molchwechselstation verbindbar ist und durch die hindurch Molche in beiden Richtungen beförderbar sind;
c) wenigstens einen mit der Steuereinheit steuerbarer Antrieb zum Verbinden und Lösen der Molchverbindung mit der Molchstation und der Molchwechselstation;
d) wenigstens einen Anschluß an eine Versorgungsquelle für ein Schiebemedium zum Befördern des wenigstens einen Molches durch die Molchverbindung.

Erfindungsgemäß ist also ein Molchaustausch möglich, ohne das die Applikationseinrichtung außer Betrieb genommen und ohne dass die Molchstation geöffnet werden muß. Die Molche werden nur zwischen der Molchstation und der Molchwechselstation ausgetauscht. Es ist nicht notwendig, dass die Molchstation für den Betreiber frei zugänglich ist, da die Molche über die Molchwechselstation der Anlage entnommen beziehungsweise zugeführt werden, so dass die Molchstation in der Applikationsvorrichtung integriert bleiben kann. Die Molchwechselstation kann hingegen von der Molchstation getrennt an einem gut zugänglichen Ort installiert sein. Durch die Verwendung von ansteuerbaren Antrieben ist ein Molchaustausch automatisch möglich.

Bei einer vorteilhaften Ausführungsform weist die Molchverbindung eine Öffnungseinheit für die Molchleitung im Bereich der Molchstation und eine Anschlusseinheit zur Molchstation auf. Dies hat den großen Vorteil, dass lediglich eine Baueinheit erforderlich ist, um die Molchleitung zu öffnen und außerdem die Verbindung zur Molchwechselstation herzustellen.

Zweckmäßig ist es hierbei, wenn die Molchleitung in der Molchstation in eine Durchlassöffnung für den wenigstens einen Molch mündet, in der Durchlassöffnung ein herausnehmbarer Verschlussstopfen angeordnet ist, die Anschlusseinheit eine Verschiebeeinheit mit einem Verschiebeantrieb aufweist, die an der Molchstation in Verlängerung zur Durchlassöffnung angeordnet ist, wobei die Verschiebeeinheit als Öffnungseinheit eine Stopfenaufnahme mit einem Stopfenantrieb für den Verschlussstopfen und einen an die Durchlassöffnung angepassten Molcheinführzylinder mit einem Zylinderantrieb aufweist und die Stopfenaufnahme und der Molcheinführzylinder wahlweise durch Verschiebung vor der Durchlassöffnung positionierbar sind und der Molcheinführzylinder über einen Molchschlauch mit der Molchwechselstation verbunden ist. Mit dem Verschlussstopfen und dem Molcheinführzylinder läßt sich die Durchlassöffnung besonders einfach druckdicht verschließen. Der Austausch des Verschlussstopfens gegen den Molcheinführzylinder kann besonders schnell erfolgen, da lediglich eine einzige Verschiebung der Verschiebeeinheit erforderlich ist.

Bei einer besonders bevorzugten Ausführungsform weist die Molchwechselstation folgende Komponenten auf:
a) wenigstens ein bewegbares Molchmagazin mit wenigstens zwei Molchaufnahmen, die durch Bewegen des Molchmagazins wahlweise mit einem Molchschlauch verbindbar sind,
b) wenigstens einen Magazinantrieb für das Molchmagazin, um die Zuordnung der Molchaufnahmen zum Molchschlauch zu verändern.

Für jeden Molch kann so eine eigene Molchaufnahme vorgesehen sein. Beispielsweise kann für jede Farbe ein eigener Molch verwendet werden, der bei einem Farbwechsel aus seiner Molchaufnahme herausgenommen wird und bei einem weiteren Farbwechsel wieder hinein befördert wird. Es können auch mehrere Molche für eine Farbe in verschiedenen Molchaufnahmen vorgesehen sein, die bei Verschleiß ausgetauscht werden können. Ein Betrieb der Einrichtung ist somit auch über einen längeren Zeitraum wartungsfrei möglich, ohne dass Molche manuell entnommen und neue Molche eingebracht werden müssen. Dadurch werden der Wartungsaufwand und die Kosten deutlich reduziert.

Vorteilhafterweise ist wenigstens eine Positionsarretierung zum Fixieren des Molchmagazins vorgesehen, so dass dieses sich während eines Austauschvorgangs nicht verschieben kann.

Bei einer weiteren vorteilhaften Ausführungsform sind an oder in der Molchwechselstation und /oder den Molchleitungen Sensoren zum Erfassen von Molchen angeordnet, wodurch bei einer automatischen Steuerung die Steuereinheit entsprechend der Position der Molche einen jeweiligen Verfahrensschritt einleiten kann.

Vorzugsweise sind auch Sensoren zur Bestimmung der jeweiligen Position der mit Antrieben bewegbaren Komponenten vorgesehen, mit denen einfach und ohne großen technischen Aufwand feststellbar ist, wann der entsprechenden Antrieb gestoppt werden muß. Hiermit können auch die jeweiligen Molchaufnahmen identifiziert werden.

Vorteilhafterweise ist wenigstens ein Sensor zur Bestimmung eines Verschleißzustandes der Molche vorgesehen. Mit diesem ist genau bestimmbar, wann ein Austausch eines verschlissenen Molches durchzuführen ist.

Mit einer verschließbaren Zuführung und Abführung zu der Versorgungsquelle für das Schiebemedium, insbesondere für Druckluft, die an der Molchstation und der Molchwechselstation angeordnet ist, kann die Beförderungsrichtung für den jeweiligen Molch vorgegeben werden. Druckluft bietet sich deshalb an, weil sie praktisch keine Verunreinigungen in das System einbringt und in die Atmosphäre entlassen werden kann.

Bei dem erfindungsgemäßen Verfahren werden zum Austausch des wenigstens einen Molches die folgenden Verfahrensschritten automatisch gesteuert durchgeführt:
a) eine Molchverbindung zwischen der Molchstation und der Molchwechselstation wird geöffnet;
b) der wenigstens eine Molch wird aus der Molchstation durch die Molchverbindung hindurch zur Molchwechselstation befördert;
c) anschließend wird aus der Molchwechselstation wenigstens ein neuer Molch durch die Molchverbindung hindurch zur Molchstation befördert;
d) die Molchverbindung wird geschlossen.

Ein Molchwechsel wird also durchgeführt, ohne dass die Molchstation geöffnet oder gar entfernt werden muss. Somit ist ein schneller Molchwechsel automatisch möglich.

Bei einer vorteilhaften Ausgestaltung des Verfahrens wird die Molchverbindung geöffnet wird, indem eine Durchlassöffnung in der Molchstation geöffnet wird und gleichzeitig ein zur Molchwechselstation führender Molchschlauch mittelbar oder unmittelbar mit der Durchlassöffnung verbunden wird und in dem zum Schließen der Molchverbindung der Molchschlauch von der Durchlassöffnung getrennt und die Durchlassöffnung geschlossen wird. Hierdurch ist mit lediglich drei Verfahrensschritten eine Verbindung zwischen der Molchstation und der Molchwechselstation automatisch herstellbar.

Bei einer besonders vorteilhaften Ausgestaltung des Verfahrens wird die Molchverbindung geöffnet, indem ein Verschlussstopfen aus der Durchlassöffnung in eine Stopfenaufnahme einer Verschiebeeinheit befördert wird und anschließend, insbesondere durch eine Querverschiebung der Verschiebeeinheit, der Verschlussstopfen von der Durchlassöffnung entfernt und gleichzeitig ein ebenfalls in der Verschiebeeinheit angeordneter Molcheinführzylinder, der über eine Molchleitung mit der Molchwechselstation verbunden ist, vor der Durchlassöffnung angeordnet und anschließend in die Durchlassöffnung geschoben wird. Die Durchlassöffnung ist hierbei immer entweder durch den Verschlussstopfen oder durch den Molcheinführzylinder abgedeckt, so dass kein separater Stopper erforderlich ist, um den Molch in der Molchleitung zu halten.

Bei einer weiteren besonders vorteilhaften Ausgestaltung des Verfahrens wird der wenigstens eine Molch einer leeren Molchaufnahme eines Molchmagazins der Molchwechselstation zugeführt, anschließend werden das Molchmagazin und wenigstens der in das Molchmagazin führende Teil der Molchverbindung relativ zueinander so bewegt, dass die Molchverbindung mit einer wenigsten einen anderen Molch enthaltenden anderen Molchaufnahme des Molchmagazins verbunden wird. Um das Molchmagazin so zu bewegen ist nur ein einfacher Antrieb notwendig, der lediglich über ein Start- und ein Stoppsignal anzusteuern ist.

Zweckmäßigerweise wird das Molchmagazin relativ zur Molchverbindung verschoben, so dass ein linear aufgebautes Molchmagazin verwendet werden kann, das wenig Einbauraum benötigt und ohne großen technischen Aufwand realisierbar ist.

Besonders vorteilhaft ist es, bei einem weiteren Austausch den wenigstens einen Molch in dieselbe Molchaufnahme des Molchmagazins zu befördern, aus der er im vorhergehenden Austauschvorgang entnommen wurde. So kann die Anzahl der erforderlichen Molchaufnahmen gering gehalten werden. Außerdem kann ein Molchwechsel schnell mit nur einer Bewegung des Molchmagazins durchgeführt werden.

Bei einer weiteren vorteilhaften Ausgestaltung des Verfahrens wird der Molchwechsel vor einem Farbwechsel durchgeführt. Dies hat den Vorteil, dass keine Vermischung von Farbrückständen in der Molchleitung erfolgen kann. Auf eine gesonderte Reinigung der Molche kann verzichtet werden. Es können auch spezielle Reinigungsmolche verwendet werden, mit denen bei einem Farbwechsel die Reinigung der Molchleitung separat durchgeführt wird, und anschließend der Farbtransport mit Farbmolchen erfolgt.

Besonders vorteilhaft ist, den Austausch automatisch durchzuführen, sobald der wenigstens eine Molch von der Steuereinheit als verschlissen erkannt wird. So kann die Austauschhäufigkeit optimal auf den Zustand der Molche angepasst werden, wodurch die Wartungshäufigkeit deutlich verringert wird.

Ein Ausführungsbeispiel der Erfindung wird nachfolgend anhand der Zeichnung näher erläutert; es zeigen
- Figur 1: schematisch eine Molchstation mit einer Molchverbindung zu einer Molchwechselstation, bei der die Molchverbindung geschlossen ist;
- Figur 2: schematisch die Molchstation mit der Molchverbindung zu der Molchwechselstation, bei der die Molchverbindung geöffnet ist.

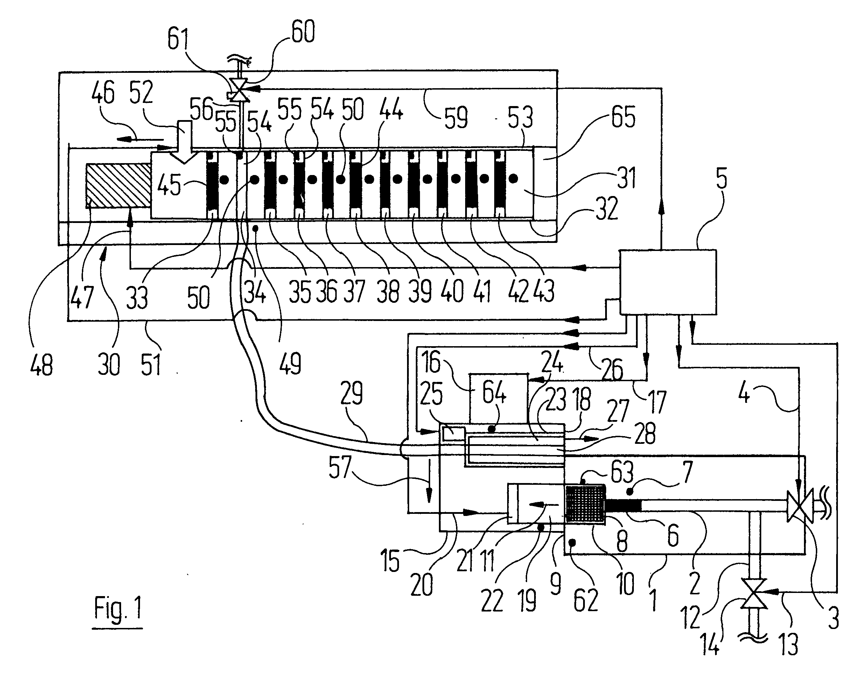

In Figur 1 ist eine Molchstation 1 dargestellt, durch die ein Molchstationskanal 2 geführt ist, dessen in Figur 1 rechtes Ende mit einer Molchleitung verbunden ist. Die Molchleitung ist mit ihrem von der Molchstation 1 abgewandten Ende in an sich bekannter Weise mit einer weiteren, nicht dargestellten Molchstation verbunden. In dem Molchstationskanal 2 ist ein Verriegelungsventil 3 angeordnet, das über eine Steuerleitung 4 mit einer Steuereinheit 5 ansteuerbar ist.

Weitere zum normalen Betrieb der Molchstation 1 erforderliche Anschlüsse, beispielsweise Anschlüsse für ein Schiebemedium, Reinigungsflüssigkeit oder ein zu förderndes Medium, sind nicht dargestellt und dem Fachmann bekannt.

In dem Molchstationskanal 2 ist in einer Parkposition am Ende des Molchstationskanals 2 innerhalb der Molchstation 1 ein verschiebbarer Molch 6 dargestellt. In der Nähe der Parkposition ist ein mit der Steuereinheit 5 über Funk in Verbindung stehender Sensor 7 angeordnet, mit dem erfasst werden kann, ob sich der Molch 6 in der Parkposition befindet. Der Molchstationskanal 2 mündet koaxial in eine zylinderförmige Durchlassöffnung 8 der Molchstation 1. Die Durchlassöffnung 8 führt zu einem Stirnbereich 9 der Molchstation 1. Die Achse der Durchlassöffnung 8 ist in Richtung des Molchstationskanals 2 ausgerichtet. Die Durchlassöffnung 8 ist mit einem zylinderförmigen Verschlussstopfen 10 verschlossen, der von dem Molchstationskanal 2 weg in Richtung des Pfeils 11 entfernbar ist.

Ist der Verschlussstopfen 10 entfernt, so ist der Molch 6 ebenfalls durch die Durchlassöffnung 8 aus der Molchstation 1 entfernbar. In der Nähe der Durchlassöffnung 8 ist ein mit der Steuereinheit 5 über Funk verbundener Sensor 63 angeordnet, mit dem die Anwesenheit des Verschlussstopfens 10 erfassbar ist.

Zwischen der Durchlassöffnung 8 und dem Verriegelungsventil 3 mündet eine Druckluftleitung 12 in den Molchstationskanal 2. Die Druckluftleitung 12 führt über ein über eine Leitung 13 mit der Steuereinheit 5 ansteuerbares Druckluftventil 14 zu einer nicht dargestellten Druckluftversorgungsquelle. Über die Druckluftleitung 12 ist der Molchstationskanal 2 mit Druckluft versorgbar.

An einem ebenen Stirnbereich 9 der Molchstation 1 ist außerhalb der Molchstation 1 eine Verschiebeeinheit 15 relativ zur Durchlassöffnung 8 verschiebbar angeordnet. Die Verschiebeeinheit 15 ist mit einem Verschiebeantrieb 16 verbunden, mit dem die Verschiebeeinheit 15 senkrecht zum Verlauf der Achse der zylinderförmigen Durchlassöffnung 8 in Richtung eines Pfeils 57 verschiebbar ist, so dass ein Querverschub der Verschiebeeinheit 15 ermöglicht wird. Der Verschiebeantrieb 16 ist mit der Steuereinheit 5 über eine Leitung 17 ansteuerbar.

Die Verschiebeeinheit 15 weist in ihrer dem Stirnbereich 9 der Molchstation 1 zugewandten, ebenfalls ebenen Oberfläche 18 eine Stopfenaufnahme 19 in Form einer zylinderförmigen Bohrung auf, die an den Verschlussstopfen 10 angepasst ist. In der dargestellten Position der Verschiebeeinheit 15 bildet die Stopfenaufnahme 19 die Verlängerung der Durchlassöffnung 8, so dass der Verschlussstopfen 10 in die Stopfenaufnahme 19 verschiebbar und vollständig in dieser versenkbar ist. An der Stopfenaufnahme 19 ist ein mit der Steuereinheit 5 über eine Leitung 20 ansteuerbarer Stopfenantrieb 21 angeordnet, mit dem der Verschlussstopfen 10 in die Stopfenaufnahme 19 hinein und aus dieser heraus bewegt werden kann. Die Stopfenaufnahme 19 und der Stopfenantrieb 21 bilden gewissermaßen eine Öffnungseinheit für den Molchstationskanal 2. Der Stopfenantrieb 21 ist eine Druckeinheit, mit der die Stopfenaufnahme 19 wahlweise mit einem Überdruck oder einem Unterdruck beaufschlagbar ist. Durch einen Unterdruck ist der Verschlussstopfen 10 in die Stopfenaufnahme 19 saugbar, durch einem Überdruck aus dieser heraus pressbar. In der Nähe der Stopfenaufnahme 19 ist ein mit der Steuereinheit 5 über Funk in Verbindung stehender Sensor 22 angeordnet, mit dem erfassbar ist, ob der Verschlussstopfen 10 sich in der Stopfenaufnahme 19 befindet.

Darüber hinaus weist die Verschiebeeinheit 15 eine Zylinderführung 23 in Form einer von ihrer Oberfläche 18 ausgehenden zylinderförmigen Bohrung auf, die neben der Stopfenaufnahme 19 angeordnet ist. Die Achse der Zylinderführung 23 verläuft parallel zur Achse der zylinderförmigen Bohrung der Stopfenaufnahme 19. Der Querschnitt der Zylinderführung 23 entspricht dem Querschnitt der Durchlassöffnung 8.

In der Zylinderführung 23 ist ein Molcheinführzylinder 24 entlang der Achse der Zylinderführung 23 verschiebbar angeordnet. Der Molcheinführzylinder 24 ist mit einem Zylinderantrieb 25 verbunden, mit dem er axial in Richtung und in Gegenrichtung eines Pfeils 27 verschoben werden kann. Der Zylinderantrieb 25 ist über eine Leitung 26 mit der Steuereinheit 5 steuerbar. Mit einem Zylindersensor 64 in der Nähe der Zylinderführung 23 ist die Anwesenheit des Molcheinführzylinders 24 erfassbar und per Funk an die Steuereinheit 5 übermittelbar. Im Inneren des Molcheinführzylinder 24 verläuft koaxial zu dessen Achse ein durchgehender Molchkanal 28, der jeweils zu den Endflächen des Molcheinführzylinders 24 offen ist. Der Innenquerschnitt des Molchkanals 28 ist an den Außenquerschnitt des Molches 6 so angepasst, dass der Molchkanal 28 für das Molch 6 passierbar ist. Der Außenquerschnitt des Molcheinführzylinders 24 ist an den Innenquerschnitt der Durchlassöffnung 8 angepasst, so dass durch Einschieben des Molcheinführzylinders 24 in die Durchlassöffnung 8 eine druckdichte Verbindung realisierbar ist.

Der Molchkanal 28 ist an seinem von der Molchstation 1 wegweisenden Ende mit einem Molchschlauch 29 verbunden, dessen Innenquerschnitt ebenfalls dem Außenquerschnitt des Molches 6 entspricht. Der Molchschlauch 29 ist wenigstens so flexibel, dass er sich an die Verschiebung der Verschiebeeinheit 15 anpasst.

Der Molchschlauch 29 führt aus der Verschiebeeinheit 15 heraus zu einer Molchwechselstation 30 und mündet dort druckdicht in ein Molchmagazin 31.

Das Molchmagazin 31 ist ein quaderförmiger Körper, der entlang einer seiner langen, dem Molchschlauch 29 zugewandten Oberfläche 32 nebeneinander angeordnet in einer Reihe identische zylinderförmige durchgängige Bohrungen als Molchaufnahmen 33 bis 43 aufweist. Der Innenquerschnitt der Bohrungen entspricht dem Außenquerschnitt des Molches 6. Gemäß Figur 1 mündet der Molchschlauch 29 senkrecht zur Oberfläche 32 in die leere Molchaufnahmen 34. Die Achse der Molchaufnahme 34 ist so orientiert, dass die Molchaufnahme 34 eine stufenlose Verlängerung des Molchschlauches 29 bildet.

In der Darstellung enthalten die Molchaufnahmen 33 und 35 bis 43 je einen Molch 45 beziehungsweise 44 für unterschiedliche Farben.

Das Molchmagazin 31 ist in einem Magazinkanal 65 in der Molchwechselstation 30 in seiner Längsrichtung senkrecht zur Achse der Molchaufnahmen 33 bis 43 in Richtung eines Pfeils 46 verschiebbar angeordnet. So kann wahlweise jede der Molchaufnahmen 33 bis 43 dem Molchschlauch 29 zugeordnet werden. Die Verschiebung des Molchmagazins 31 wird durch einen über eine Leitung 47 mit der Steuereinheit 5 steuerbaren Magazinantrieb 48 bewirkt.

In der Nähe der Mündung des Molchschlauches 29 in das Molchmagazin 31 ist ein Sensor 49 angeordnet, mit dem erfassbar ist, ob das Molchmagazin 31 richtig positioniert ist und die Molchaufnahme 34 bündig an den Molchschlauch 29 anschließt. Der Sensor 49 steht per Funk mit der Steuereinheit 5 in Verbindung. In der Nähe jeder der Molchaufnahmen 33 bis 43 ist jeweils ein weiterer Sensor 50 angeordnet, mit dem erfasst wird, ob die jeweilige Molchaufnahme leer oder mit einem Molch 44 beziehungsweise 45 gefüllt ist. Die Sensoren 50 stehen ebenfalls per Funk mit der Steuereinheit 5 in Verbindung.

Um das Molchmagazin 31 in der gewählten Position zu fixieren, ist eine lösbare, mit der Steuereinheit 5 über die Leitung 51 ansteuerbare Positionsarretierung 52 an dem Molchmagazin 31 vorgesehen. Die Positionsarretierung 52 hat die Funktion einer Bremse, die auf die der Oberfläche 32 gegenüberliegende Fläche 53 des Molchmagazins 31 drückt.

Die Molchaufnahmen 33 bis 43 weisen jeweils in einem dem Molchschlauch 29 gegenüberliegenden Ende 54 einen Anschlag 55 auf, mit dem verhindert wird, dass die Molche 44 beziehungsweise 45 aus der jeweiligen Molchaufnahme herausrutschen. Zu dem Ende 54 der jeweils gewählten Molchaufnahme 34 führt ein Druckluftkanal 56, der mit der Molchaufnahme 34 druckdicht verbunden ist. Der Druckluftkanal 56 ist eine durchgängige Bohrung in der Molchwechselstation 30, der von der dem Molchschlauch 29 abgewandten Oberfläche der Molchwechselstation 30 zum Magazinkanal 65 führt. Der Druckluftkanal 56 ist relativ zum Molchschlauch 29 ortsfest, und ist ebenso wie der Molchschlauch 29 bei einer Verschiebung des Molchmagazins 31 der jeweils gewählten Molchaufnahme 34 zugeordnet. Das der Molchaufnahme 34 abgewandte Ende des Druckluftkanals 56 ist mit einer nicht dargestellten, an sich bekannten Versorgungsquelle für Druckluft verbunden. Mit Druckluft kann ein hier nicht dargestellter Molch aus der jeweils gewählten Molchaufnahme 34 in den Molchschlauch 29 befördert werden. Der Druckluftkanal 56 weist darüber hinaus ein über die Leitung 59 durch die Steuereinheit 5 ansteuerbares Druckluftventil 60 auf, mit dem die Druckluftzufuhr regulierbar ist.

Das Druckluftventil 60 weist außerdem ein ansteuerbares Auslaßventil 61 auf, durch das in geöffnetem Zustand Druckluft aus der jeweiligen Molchaufnahme 43 bis 43 entweichen kann.

Darüber hinaus weist die Vorrichtung nicht dargestellte Sensoren auf, mit denen der Verschleisszustand der Molche 6, 44, 45 efassbar ist und deren Funktionsweise dem Fachmann aus der DE 102 34 247 A1 an sich bekannt ist.

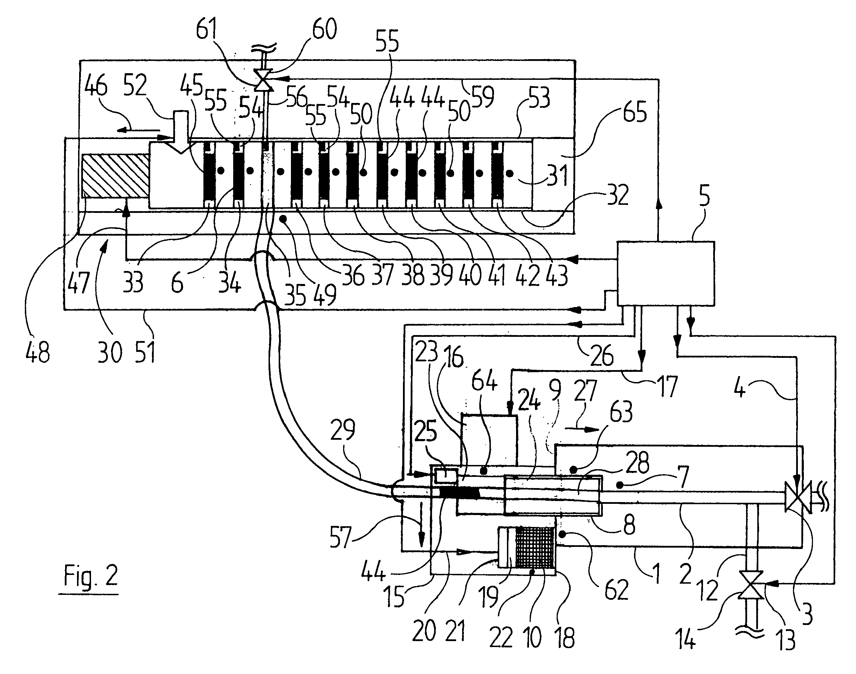

In Figur 2 ist die gleiche Vorrichtung wie in Figur 1 während eines Molchaustausches dargestellt. Der Molcheinführzylinder 24 ist hier in die Verschlussöffnung 8 eingeschoben, der verbrauchte Molch 6 befindet sich bereits in der Molchaufnahme 34, der Molchschlauch 29 ist der nächsten Molchaufnahme 35 zugeordnet und der entsprechende neue Molch 44 befindet sich bereits in dem Molchschlauch 29 auf dem Weg zur Molchstation 1.

Im folgenden wird nun ein Molchaustausch ausgehend von der in Figur 1 dargestellten Ausgangssituation beschrieben.

Sobald in an sich bekannter Weise die Steuereinheit 5 von der nicht dargestellten Applikationseinrichtung die Information erhält, dass ein Farbwechsel durchgeführt wird oder der Molch 6 verschlissen und daher auszutauschen ist, wird zunächst der Molch 6 in den Molchstationskanal 2 in an sich bekannter Weise in seine Parkposition vor dem Verschlussstopfen 10 befördert. Das Erreichen der Parkposition wird von dem Sensor 7 erfasst und an die Steuereinheit 5 übermittelt. Dann wird der Verschlussstopfen 10 mit dem durch die Steuereinheit 5 gestarteten Stopfenantrieb 21 in Richtung des Pfeils 11 aus der Durchlassöffnung 8 in die Stopfenaufnahme 19 befördert. Dort wird mit dem Sensor 22 die Anwesenheit des Verschlussstopfens 10 erfasst und mit der Steuereinheit 5 der Stopfenantrieb 21 gestoppt.

Daraufhin startet die Steuereinheit 5 den Verschiebeantrieb 16, um die Verschiebeeinheit 15 in Richtung des Pfeils 57 zu verschieben. Durch diesen Querverschub der Verschiebeeinheit 15 quer zur Molchstation 1 wird die Zylinderführung 23 und der Molcheinführzylinder 24 in Richtung der Durchlassöffnung 8 verschoben und gleichzeitig der Verschlussstopfen 10 von der Durchlassöffnung 8 entfernt. Sobald ein mit der Steuereinheit 5 über Funk verbundene Sensor 62 erfasst, dass die Zylinderführung 23 vor der Durchlassöffnung 8 positioniert ist, stoppt die Steuereinheit 5 den Verschiebeantrieb 16.

Anschließend wird der Zylinderantrieb 25 durch die Steuereinheit 5 gestartet, um den Molcheinführzylinder 24 bis zum Molchstationskanal 2 in die Durchlassöffnung 8 zu schieben. Sobald der Sensor 63 erfasst , dass die gewünschte Position erreicht ist, wird der Zylinderantrieb 25 durch die Steuereinheit 5 gestoppt. Der Molchkanal 28 und der angeschlossene Molchschlauch 29 bilden nun eine Verlängerung des Molchstationskanals 2.

Nun wird das Ventil 14 der Druckluftleitung 12 öffnend und gleichzeitig das Verschlußventil 3 für den Molchstationskanal 2 schließend angesteuert, so dass Druckluft zu dem Molch 6 gelangt. Außerdem wird das Auslaßventil 61 öffnend angesteuert. Mit der Druckluft wird nun der Molch 6 durch die durchgängige Verbindung von dem Molchstationskanal 2 durch den Molchkanal 28 hindurch zum Molchschlauch 29 in die leere Molchaufnahme 34 im Molchmagazin 31 befördert. Sobald der Molch 6 in der leeren Molchaufnahme 34 angekommen ist, wird dies durch den der Molchaufnahme 34 zugeordneten Sensor 50 erfasst und das Druckluftventil 14 schließend und das Verschlussventil 3 des Molchstationskanals 2 öffnend angesteuert, so dass der Bereich von dem Molchstationskanal 2 bis zur Molchaufnahme 34 wieder druckfrei ist.

Danach wird die Positionsarretierung 52 des Molchmagazins 31 angesteuert, so dass diese gelöst wird. Nun wird der Antrieb 19 durch die Steuereinheit 5 gestartet, um das Molchmagazin 31 in Richtung des Pfeils 46 zur nächsten, mit einem neuen Molch 44 befüllten Molchaufnahme 35 zu verschieben. Sobald die Molchaufnahme 35 mit dem Molchschlauch 29 verbunden ist, wird dies vom Sensor 49 erfasst, und die Steuereinheit 5 stoppt den Magazinantrieb 48. Danach werden das Auslaßventil 61 schließend und das Druckluftventil 60 öffnend angesteuert, so dass Druckluft der Molchaufnahme 35 zuströmen kann. Der neue Molch 44 wird nun mit Druckluft durch den Molchschlauch 29 und den Molchkanal 28 hindurch in den Molchstationskanal 2 befördert. Die Molchaufnahme 35 ist nun leer und bereit für die Wiederaufnahme des Molches 44, sobald dieser beim nächsten Austauschzyklus ausgetauscht wird. Die nun vorliegende Situation ist in Figur 2 dargestellt.

Bei Ankunft des Molches 44 in dem Molchstationskanal 2 wird dieser vom Sensor 7 erfasst. Daraufhin wird das Druckluftventil 60 schließend gesteuert.

Danach wird der Zylinderantrieb 25 angesteuert, um den Molcheinführzylinder 24 aus der Durchlassöffnung 8 zurück in die Zylinderführung 23 zu ziehen. Sobald der Molcheinführzylinder 24 vollständig in der Zylinderführung 23 versenkt ist, wird dieser vom Zylindersensor 64 erfasst, woraufhin der Zylinderantrieb 25 gestoppt wird. Nun wird der Verschiebeantrieb 16 angesteuert, der daraufhin die Verschiebeeinrichtung 8 entgegen der Richtung des Pfeils 57 entlang der Stirnfläche 9 der Molchstation 1 wieder zurück zu ihre Ausgangsposition verschiebt. Sobald der Verschlussstopfen 10 wieder vor der Durchlassöffnung 8 positioniert ist, wird dies von dem Sensor 62 erfasst und der Verschiebeantrieb 16 gestoppt. Daraufhin wird der Stopfenantrieb 21 gestartet, der den Verschlussstopfen 10 in die Durchlassöffnung 8 zurückschiebt. Das Erreichen der Endposition des Verschlussstopfens 10 wird vom Sensor 63 erfasst, worauf der Stopfenantrieb 21 gestoppt wird. Der Molchstationskanal 2 ist jetzt wieder in Richtung der Verschiebeeinrichtung 15 verschlossen. Der neue Molch 44 ist nun in an sich bekannter Weise einsetzbar.

Statt des Verschlussstopfens 10 kann auch eine andere Verschlusseinrichtung, beispielsweise eine senkrecht zum Molchstationskanal 2 verschiebbare Abschlussplatte, verwendet werden.

Der Stirnbereich 9 kann eben oder gekrümmt sein. Er kann beispielsweise als Segment einer Kugeloberfläche ausgebildet sein, auf dem die Verschiebeeinheit 15 fortnschlüssig verschoben werden kann. In diesem Fall sind die Achsen der Zylinderführung 23 und der Stopfenaufnahme 19 nicht parallel anzuordnen. Es genügt auch, wenn lediglich Bereiche um die Öffnung der Stopfenaufnahme 19 und der Zylinderführung 23 so an die Durchlassöffnung 8 angepaßt sind, dass sie in der entsprechenden Position der Verschiebeeinheit 15 jeweils stufenlos mit der Durchlassöffnung 8 verbunden sind.

Die Verschiebeeinheit kann auch als Trommel aufgebaut sein, so dass die Stopfenaufnahme und die Zylinderführung statt durch Querverschub durch Drehung der Trommel an die Durchlassöffnung 8 positioniert werden.

Es versteht sich, dass das Molchmagazin auch in einer anderen als der linearen Form aufgebaut sein kann. Es kann hier auch eine runde, beispielsweise trommelförmige Anordnung verwendet werden, ähnlich einer Trommel eine Trommelrevolvers. Das Molchmagazin kann auch als Band, beispielsweise als Endlosband realisiert sein, auf dem die Molchaufnahmen in Form von Hülsen nebeneinander befestigt sind.

Jede Molchaufnahme kann auch über einen eigenen Druckluftkanal verfügen, der über ein separates Ventil getrennt geöffnet beziehungsweise geschlossen werden kann. Statt der Druckluft kann auch ein Unterdruck zum Befördern der Molche eingesetzt werden. Es ist auch ein anderes Schiebemedium, beispielsweise eine Flüssigkeit einsetzbar.

Es können auch mehrere Molche für dieselbe Farbe in verschiedenen Molchaufnahmen vorgesehen sein, die bei Verschleiß ausgetauscht werden können.

Als Positionsarretierung kann auch ein Bolzen verwendet werden, der zur Fixierung in entsprechend angeordnete Löcher im Molchmagazin geschoben werden kann. Die Positionsarretierung kann aber auch in den Magazinantrieb integriert sein.

Die Verbindungen der Steuereinheit 5 mit den Sensoren, Antrieben und Ventilen können sowohl über Leitungen als auch über Funkstrecken realisiert werden.

Die Antriebe können als Motoren, als Magnetaktuatoren oder auch als Druck erzeugende Einheiten realisiert sein.

## Patentansprüche

1. Versorgungseinheit für eine Applikationseinrichtung, insbesondere für eine
Lackapplikationseinrichtung, mit wenigstens einem Molch, der in wenigstens einer Molchleitung zwischen wenigstens zwei Molchstationen beförderbar ist, und mindestens einem Sensor zum Erfassen der Position des wenigstens einen Molches, der mit einer Steuereinheit zum Steuern der Versorgungseinheit in Verbindung steht,
**gekennzeichnet durch** eine automatisch steuerbare Molchaustauschvorrichtung, die folgende Komponenten aufweist:
a) eine Molchwechselstation (30) mit einer Mehrzahl von Molchaufnahmen (33 bis 43) für Molche (6, 44, 45);
b) eine zuschaltbare druckdichte Molchverbindung (28, 29), mit der die Molchstation (1) mit der Molchwechselstation (30) verbindbar ist und **durch** die hindurch Molche (6, 44, 45) in beiden Richtungen beförderbar sind;
c) wenigstens einen mit der Steuereinheit (5) steuerbarer Antrieb (16, 21, 25) zum Verbinden und Lösen der Molchverbindung (28, 29) mit der Molchstation (1) und der Molchwechselstation (30);
d) wenigstens einen Anschluß (12, 56) an eine Versorgungsquelle für ein Schiebemedium zum Befördern des wenigstens einen Molches (6, 44, 45) **durch** die Molchverbindung (28, 29).

2. Versorgungseinheit nach Anspruch 1, **dadurch gekennzeichnet, dass** die
Molchverbindung (28, 29) eine Öffnungseinheit (19,21) für die Molchleitung (2) im Bereich der Molchstation (1) und eine Anschlusseinheit (15, 16, 24, 25) zur Molchstation (1) aufweist.

3. Versorgungseinheit nach Anspruch 2, **dadurch gekennzeichnet, dass** die
Molchleitung (2) in der Molchstation (1) in eine Durchlassöffnung (8) für den wenigstens einen Molch (6) mündet, in der Durchlassöffnung (8) ein herausnehmbarer Verschlussstopfen (10) angeordnet ist, die Anschlusseinheit (15, 16, 24, 25) eine Verschiebeeinheit (15) mit einem Verschiebeantrieb (16) aufweist, die an der Molchstation (1) in Verlängerung zur Durchlassöffhung (8) angeordnet ist, wobei die Verschiebeeinheit (15) als Öffnungseinheit eine Stopfenaufnahme (19) mit einem Stopfenantrieb (21) für den Verschlussstopfen (10) und einen an die Durchlassöffnung (8) angepassten Molcheinführzylinder (24) mit einem Zylinderantrieb (25) aufweist und die Stopfenaufnahme (19) und der Molcheinführzylinder (24) wahlweise durch Verschiebung vor der Durchlassöffnung (8) positionierbar sind und der Molcheinführzylinder (24) über einen Molchschlauch (29) mit der Molchwechselstation (30) verbunden ist.

4. Versorgungseinheit nach einem der Ansprüche 1 bis 3, **dadurch gekennzeichnet, dass** die Molchwechselstation (30) folgende Komponenten aufweist:
a) wenigstens ein bewegbares Molchmagazin (31) mit wenigstens zwei Molchaufnahmen (33 bis 43), die durch die Bewegung des Molchmagazins (31) wahlweise mit einem Molchschlauch (29) verbindbar sind,
b) wenigstens einen Magazinantrieb (48) für das Molchmagazin (31), um die Zuordnung der Molchaufnahmen (33 bis 43) zum Molchschlauch (29) zu verändern.

5. Versorgungseinheit nach Anspruch 4, **gekennzeichnet durch** wenigstens eine Positionsarretierung (52) zum Fixieren des Molchmagazins (31).

6. Versorgungseinheit nach einem der vorigen Ansprüche, **dadurch gekennzeichnet, dass** an oder in der Molchwechselstation (31) und /oder der wenigstens einen Molchleitung (2) Sensoren (22, 49, 62, 64) zum Erfassen der Molche (6, 44, 45) angeordnet sind.

7. Versorgungseinheit nach einem der vorigen Ansprüche, **dadurch gekennzeichnet, dass** Sensoren (22, 49, 62, 64) zur Bestimmung der jeweiligen Position der mit Antrieben bewegbaren Komponenten (8, 32,15, 24) vorgesehen sind.

8. Versorgungseinheit nach einem der vorigen Ansprüche, **dadurch gekennzeichnet, dass** wenigstens ein Sensor zur Bestimmung eines Verschleißzustandes der Molche (6, 44, 45) vorgesehen ist.

9. Versorgungseinheit nach einem der vorigen Ansprüche, **dadurch gekennzeichnet, dass** jeweils eine verschließbare Zuführung und Abführung ( 2, 12, 3, 14, 55, 56, 60) zu der Versorgungsquelle für das Schiebemedium, insbesondere für Druckluft, an der Molchstation (1) und der Molchwechselstation (30) angeordnet ist.

10. Verfahren zum Betreiben einer Versorgungseinheit für eine Applikationseinrichtung, insbesondere für eine Lackapplikationseinrichtung, bei dem wenigstens ein Molch in wenigstens einer Molchleitung zwischen wenigstens zwei Molchstationen befördert und die Position des wenigstens einen Molches mit mindestens einem Sensor erfasst wird, insbesondere zum Betreiben einer Versorgungseinheit nach einem der Ansprüche 1 bis 9,
**dadurch gekennzeichnet, dass**
zum Austausch des wenigstens einen Molches (6) die folgenden Verfahrensschritte automatisch gesteuert durchgeführt werden:
a) eine Molchverbindung (28, 29) zwischen der Molchstation (1) und einer Molchwechselstation (30) wird geöffnet;
b) der wenigstens eine Molch (6) wird aus der Molchstation (1) durch die Molchverbindung (28, 29) hindurch zur Molchwechselstation (30) befördert;
c) anschließend wird aus der Molchwechselstation (30) wenigstens ein neuer Molch (44) durch die Molchverbindung (28, 29) hindurch zur Molchstation (1) befördert;
d) die Molchverbindung (28, 29) wird geschlossen.

11. Verfahren nach Anspruch 10, **dadurch gekennzeichnet, dass** die Molchverbindung (28, 29) geöffnet wird, indem eine Durchlassöffnung (8) in der Molchstation (1) geöffnet wird und gleichzeitig ein zur Molchwechselstation (30) führender Molchschlauch (29) mittelbar oder unmittelbar mit der Durchlassöffnung (8) verbunden wird und indem zum Schließen der Molchverbindung (28, 29) der Molchschlauch (29) von der Durchlassöffnung (8) getrennt und die Durchlassöffnung (8) geschlossen wird.

12. Verfahren nach Anspruch 11, **dadurch gekennzeichnet, dass** die Molchverbindung (28, 29) geöffnet wird, indem ein Verschlussstopfen (10), der als Verschlussmittel dient, aus der Durchlassöffnung (8) in eine Stopfenaufnahme (19) einer Verschiebeeinheit (15) befördert und anschließend, insbesondere durch eine Querverschiebung der Verschiebeeinheit (15), der Verschlussstopfen (10) von der Durchlassöffnung (8) entfernt und gleichzeitig ein ebenfalls in der Verschiebeeinheit (15) angeordneter Molcheinführzylinder (24), der über eine Molchleitung (2) mit der Molchwechselstation (30) verbunden ist, vor der Durchlassöffnung (8) angeordnet und anschließend in die Durchlassöffnung (8) geschoben wird.

13. Verfahren nach einem der Ansprüche 10 bis 12, **dadurch gekennzeichnet, dass**
der wenigstens eine Molch einer leeren Molchaufnahme (34) eines Molchmagazins (32) der Molchwechselstation (30) zugeführt wird, dass anschließend das Molchmagazin (31) und wenigstens der in das Molchmagazin (31) führende Teil der Molchverbindung (28, 29) relativ zueinander so bewegt werden, dass die Molchverbindung (28, 29) mit einer wenigsten einen anderen Molch (44) enthaltenden anderen Molchaufnahme (35) des Molchmagazins (32) verbunden wird.

14. Verfahren nach Anspruch 13, **dadurch gekennzeichnet, dass** das Molchmagazin (31) relativ zur Molchverbindung (28, 29) verschoben wird.

15. Verfahren nach Anspruch 13 oder 14, **dadurch gekennzeichnet, dass** bei einem
weiteren Austausch des wenigstens einen Molches (44) dieser in dieselbe Molchaufnahme (35) des Molchmagazins (32) befördert wird, aus der er im vorhergehenden Austauschvorgang entnommen wurde.

16. Verfahren nach einem der Ansprüche 10 bis 15, **dadurch gekennzeichnet, dass** der Austausch vor einem Farbwechsel automatisch durchgeführt wird.

17. Verfahren nach einem der Ansprüche 10 bis 15, **dadurch gekennzeichnet, dass**
der Austausch automatisch durchgeführt wird, sobald der wenigstens eine Molch (6) von der Steuereinheit (5) als verschlissen erkannt wird.
